# EUROPEAN PATENT SPECIFICATION

(11) **EP 3 734 142 B1**
(45) Date of publication and mention of the grant of the patent: **16.03.2022**
(21) Application number: 20171143.9
(22) Date of filing: 23.04.2020
(51) Int. Cl.: F21S 8/04, F21V 17/14, F21V 21/03, F16B 21/02, F16B 21/04, F16B 21/09

(54) **SURFACE-MOUNT DOWNLIGHT**
OBERFLÄCHENMONTIERTES DOWNLIGHT
ÉCLAIRAGE À FLUX DIRIGÉ VERS LE BAS MONTÉ EN SURFACE

(30) Priority: 29.04.2019 CN 201920611821 U; 29.04.2019 CN 201920611060 U
(43) Date of publication of application: 04.11.2020
(73) Proprietor: Leedarson Lighting Co., Ltd., Zhangzhou, Fujian 363900 (CN)
(72) Inventor: LIN, Biquan, Fujian (CN); YU, Yuanbin, Fujian (CN)
(74) Representative: Patentanwälte Bals & Vogel

(56) References cited:
- DE-A1- 2 323 944
- DE-A1-102010 012 917
- GB-A- 631 499
- GB-A- 713 700
- KR-U- 20170 003 837
- US-A1- 2013 128 578
- US-A1- 2016 363 297

## Description

### TECHNICAL FIELD

The present application relates to the field of ceiling-type illumination devices, and more particularly relates to a surface-mount downlight.

### BACKGROUND

The surface-mount downlight may be a ceiling-mounted illumination device which needs to be installed on the ceiling during use, and usually the surface-mount downlight is mounted on the ceiling in a manner of a screw-lock connection where at least two screws are required for fixing. It is necessary to support the surface-mount downlight, during an installation process, before each screw being tightened, and because the surface-mount downlight is usually heavier, tightening these screws while supporting the surface-mount downlight greatly increases the difficulty of installation by the staff, which results in an inconvenient installation.

US 2013/128578 A discloses an LED (light emitting diode) lamp incorporating a detachable lamp body for easily mounting the lamp to a support such as a ceiling through a keyhole coupling. The keyhole coupling method is also known from KR 20170003837 U. An actuator actuating hydraulic valve and fastened to housing element by screw-free fastening element is known from DE 102010012917 A. DE 2323944 A relates to mounting round insert bodies and a fixed support plate, in particular of motor vehicles. GB 713700 A discloses lighting fittings for electrical lampholders, improvements in or relating to shrouds.

US 2016/363297A1 discloses a lighting arrangement including a mounting ring, a luminaire, locking arms, and posts. GB 631499A discloses a connecting device comprising two members arranged for relative angular movement about an axis and each provided with arcuately disposed tongues which are capable of mutual engagement.

### SUMMARY

An object of the present application is to overcome the deficiency existed in prior arts, and provide a surface-mount downlight that aims to solve the problem of inconvenient installation.

The present application provides the following technical solutions:
A surface-mount downlight configured to be installed to a ceiling. The surface-mount downlight includes a mounting top plate configured to be connected to the ceiling and a downlight body configured to be connected to the mounting top plate, where the downlight body also includes a hollow main body and a light source module within the hollow main body. The surface-mount downlight with a suspension mount assembly which includes at least two connecting plates provided by the mounting top plate and at least two fixing blocks provided by and integrally formed with the hollow main body being corresponding to the at least two connecting plates. The suspension mount assembly is also configured to be in a first position or in a second position. In the first position, the at least two connecting plates and the at least two fixing blocks avoid each other in a suspension mount direction, so that the downlight body can freely move toward and away from the mounting top plate in the suspension mount direction, thereby facilitating assembly and disassembly. in the second position, the downlight body is mounted to the mounting top plate, and the downlight body is prohibited from moving toward or away from the mounting top plate in the suspension mount direction. With a rotational movement of the mounting top plate with respect to the downlight body in a direction substantially transverse to the suspension mount direction, the first position and the second position can be switched.

Z According to the invention, the at least two fixing blocks disposed on the inner wall of the hollow main body and located at the same horizontal position, and the at least two connecting plates are arranged at the edge of the mounting top plate and extending circumferentially, wherein the connecting plate further comprises a connecting portion and a hanging portion connected to the connecting portion and configured to be inclined downward.

According to the invention, the connecting plate further comprises a guide portion connected to an end of the hanging portion that faces away from the connecting portion, and the guide portion is arranged substantially horizontally.

In some embodiments, each of the hanging portions is configured to be extended clockwise, and a clockwise rotation of the mounting top plate with respect to the downlight body results in switching from the first position to the second position, or each of the hanging portions is configured to be extended counterclockwise, and a counterclockwise rotation of the mounting top plate with respect to the downlight body results in switching from the first position to the second position.

In some embodiments, the number of the fixing blocks is larger than the number of connecting plates, and each of the connecting plates is respectively mounted with a fixing block when the mounting top plate is in the second position.

In some embodiments, two connection plates are provided, and two connection plates are symmetrically arranged about a rotation axis of the mounting top plate.

During installation, the mounting top plate is mounted on the ceiling first, when installing the mounting top plate, there is no need to lift the heavier downlight body, and since the mounting top plate is lighter in weight, the installation of the mounting top plate is relatively simple. When installing the downlight body, it only requires lifting the downlight body to make the mounting top plate being placed into the hollow main body, then rotating the downlight body to complete the installation of the surface-mount downlight.

In some embodiments, the surface-mount downlight may also include a reflective cover located in the hollow main body for focusing light generated by the light source module.

Based on the structural design of the present application, the surface-mount downlight is divided into two parts, one part is the lighter mounting top plate, and the other is the heavier downlight body. During the installation process, installing the mounting top plate without lifting the heavier downlight body, while installing the downlight body, in some embodiments, it only requires lifting the downlight body to make the mounting top plate being placed in the hollow main body, and then rotating the downlight body to complete the installation of the surface-mount downlight, such that the supporting time by the staff is reduced, it thus beneficially reduces the difficulty of the installation by the staff.

### BRIEF DESCRIPTION OF DRAWINGS

In order to explain the technical solution of embodiments of the present application more clearly, the drawings used in the description of the embodiments will be briefly described hereinbelow. Obviously, the drawings in the following description are some embodiments of the present application, and for persons skilled in the art, other drawings may also be obtained on the basis of these drawings without any creative work.
FIG. 1 is a schematic diagram of an overall structure of a surface-mount downlight in accordance with an embodiment of the present application;
FIG. 2 is an enlarged schematic structural view of part A in FIG. 1;
FIG. 3 is an exploded schematic view of the surface-mount downlight in accordance with an embodiment of the present application;
FIG. 4 is an enlarged schematic structural view of part B in FIG. 3;
FIG. 5 is a schematic diagram of an overall structure of a surface-mount downlight in accordance with a non-claimed embodiment of the present application;
FIG. 6 is an enlarged schematic structural view of part A in FIG. 5;
FIG. 7 is an exploded schematic view of the surface-mount downlight in accordance with another non-claimed embodiment of the present application;
FIG. 8 is an enlarged schematic structural view of part B in FIG. 7; and
FIG. 9 is an enlarged schematic structural view of part C in FIG. 7.

In the drawings: 100-downlight body; 110-cylindrical body; 120-fixing block; 130-light source module; 140-reflecting cover; 200-mounting top plate; 210-base plate; 220-connecting plate; 221-connecting portion; 222-hanging portion; 223-guide portion; 400-mounting top plate; 410-mounting chute; 4101-front chute section; 4102-rear chute section; 300-downlight body; 310-shell body; 320 -fixed sliding post; 321-connecting post; 322-suspension post; 330-light source module; 340-intermediate connecting member; 350-connecting assembly; 360-reflecting cover; 500-elastic arm.

### DETAILED DESCRIPTION

In order to make the objectives, technical solutions and advantages of the present disclosure more comprehensible, the present disclosure is further described in detail hereinbelow with reference to the accompanying drawings and embodiments. It should be understood that the specific embodiments described herein intended only to interpret the present application and are not intended to limit the present application.

An embodiment of the present application provides a surface-mount downlight.

Please refer to FIGS, 1 to 4, the surface-mount downlight includes a downlight body 100 and a mounting top plate 200.

The downlight body 100 includes a cylindrical body 110 having a cylindrical shape, a light source module 130 configured for generating light and located in the cylindrical body 110, and at least two fixing blocks 120 connected to the inner wall surface of the cylindrical body 110 and all located at the same horizontal position.

The mounting top plate 200 is fixed connected to a ceiling, that is, the installation of the surface-mount downlight may be completed once the downlight body 100 is connected to the mounting top plate 200. The mounting top plate 200 may be capable of entering into the cylindrical body 110 and rotating with respect to the cylindrical body 110. The mounting top plate 200 includes a base plate 210 connected to the ceiling and at least two connecting plates 220 disposed at the peripheral side of the base plate 210 and extending circumferentially, each connecting plate 220 includes a connecting portion 221 and a hanging portion 222 connected to the connecting portion 221. The mounting top plate 200 has a first and second position with respect to the downlight body 100. In the first position, the mounting top plate 200 and the downlight body 100 avoid each other so that the mounting top plate 200 is able to enter and exit the cylindrical body 110, and in the second position, the at least two connecting plates 220 are respectively mounted with a fixing block 120 to restrict the mounting top plate 200 from entering and exiting the cylindrical body 110. A rotation of the mounting top plate 200 with respect to the downlight body 100 enables a switch between the first position and the second position.

In this embodiment, the extending direction of each hanging portion 222 may be clockwise, and then the mounting top plate 200 rotates clockwise with respect to the downlight body 100 to switch from the first position to the second position.

During installation, first installing the mounting top plate 200 to the ceiling, where the mounting top plate 200 is lighter in weight with respect to the entire surface-mount downlight, and the installation of the mounting top plate 200 is relatively simple, and then fifting the downlight body 100 so that the mounting top plate 200 enters into the cylindrical body 110, the horizontal position of the end of the hanging portion 222 facing away from the connecting portion 221 is lower than that of the fixing block 120, and the end of each hanging portion 222 facing away from the connecting portion 221 is located at the rear side of the corresponding fixing block 120 in the clockwise direction, and finally, rotating the downlight body 100 counterclockwise, that is, the mounting top plate 200 is rotated clockwise with respect to the downlight body 100, such that each of the fixing blocks 120 is mounted above the hanging portion 222 thereby connecting the downlight body 100 to the mounting top plate 200, and thus the installation of the surface-mount downlight is completed.

It can be seen from the above that based on the structural design of the present application, the surface-mount downlight is divided into two parts, one part is the lighter mounting top plate 200, and the other is the heavier downlight main body 100. During the installation process, when installing the mounting top plate 200, there is no need to lift the heavier downlight body 100, and when installing the downlight body 100, it only requires lifting the downlight body 100 to make the mounting top plate 200 being placed into the cylindrical body 110, then rotating the downlight body 100 to complete the installation of the surface-mount downlight, such that the supporting time by the staff is reduced which is helpful to reduce the difficulty of installation by the staff.

In other embodiments, the extending direction of each hanging portion 222 may be counterclockwise, and the mounting top plate 200 rotates counterclockwise with respect to the downlight body 100 to switch from the first position to the second position,

Based on this, during installation, first installing the mounting top plate 200 to the ceiling, where the mounting top plate 200 is lighter in weight with respect to the entire surface-mount downlight, and the installation of the mounting top plate 200 is relatively simple, and then lifting the downlight body 100 so that the mounting top plate 200 enters into the cylindrical body 110, the horizontal position of the end of the hanging portion 222 facing away from the connecting portion 221 is lower than that of the fixing block 120, and the end of each hanging portion 222 facing away from the connecting portion 221 is located at the rear side of the corresponding fixing block 120 in the counterclockwise direction, and finally, rotating the downlight body 100 clockwise, that is, the mounting top plate 200 is rotated clockwise with respect to the downlight body 100, such that each of the fixing blocks 120 is mounted above the hanging portion 222 thereby connecting the downlight body 100 to the mounting top plate 200, and thus the installation of the surface-mount downlight is completed.

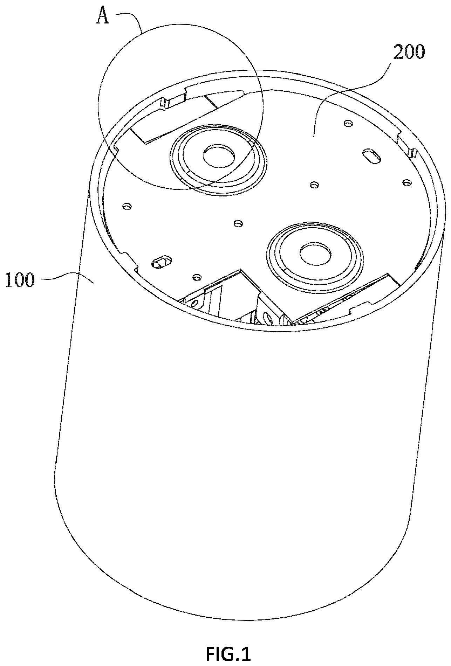

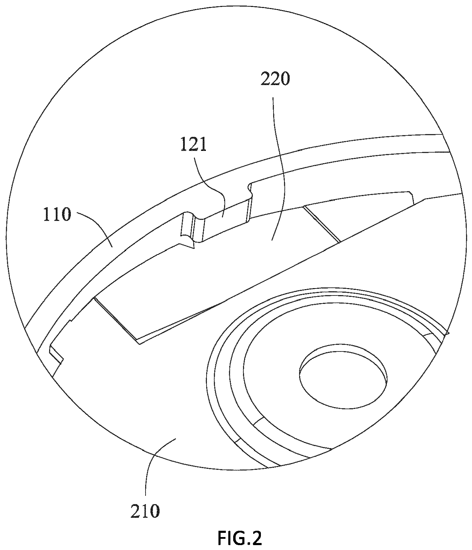

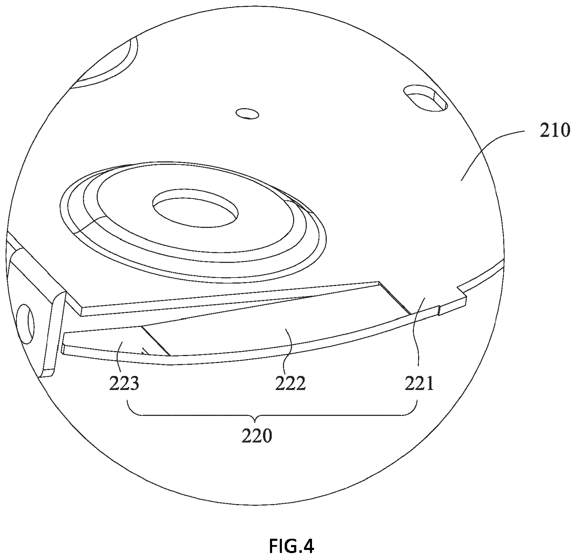

Please refer to FIGS. 1 to 4. In the embodiment of the present application, the hanging portion 222 is also inclined downward, so that the height required for the downlight body 100 to be lifted is favorably reduced.

In addition, based on this structure, in the process of rotating the fixing block 120 onto the hanging portion 222, the fixing block 120 is gradually raised under the guidance of the hanging portion 222, and then in combination with the actual application, where the upper side of the mounting top plate 200 is connected to the ceiling, the upper side of the cylindrical body 110 will contact against the ceiling, meanwhile, the static friction between the fixing block 120 and the hanging portion 222 may be increased, it thus is beneficial to prevent the downlight body 100 from detaching from the mounting top plate 200.

Please refer to FIGS. 1 to 4. In the embodiment of the present application, the connecting plate 220 includes a guide portion 223 which is connected to the end of the hanging portion 222 that faces away from the connecting portion 221, and the guide portion 223 is horizontally arranged. It can be seen from the above that during the process of rotating the fixing block 120 onto the hanging portion 222, it is necessary to support the downlight body 100 when applying a rotating force to the downlight body 100, and meanwhile, it would be necessary to increase the rotating force for rotating the downlight body 100 due to the upper side of the cylindrical body 110 contacts against the ceiling. Based on this structure, where the fixing block 120 is placed on the guide portion 223 before rotating the downlight body 100. Such that the fixing block 120 is placed on the guide portion 223 without excessive rotating force, and when it is rotated onto the hanging portion 222, it does not need to support the downlight body 100, thus it is helpful for reducing the difficulty of installing the downlight body 100.

Please refer to FIGS. 1 to 4, the number of the fixing blocks 120 is larger than the number of the connecting plates 220, and each connecting plate 220 is respectively mounted with a fixing block 120 when the mounting top plate 200 is in the second position. In this way, in actual use, each fixing block 120 only needs to be mounted to a connecting plate 220, which is beneficial to improve the connection efficiency.

Please refer to FIGS. 1 to 4. In the embodiment of the present application, two connecting plates 220 are provided, and the two connecting plates 220 may be arranged symmetrically about the rotation axis of the mounting top plate 200. Based on this structural design, firstly, it is advantageous to simplify the mounting top plate 200 when the connection is satisfied, and secondly, the relative arrangement of the two connecting plates 220 is also helpful to balance the bearing of the mounting top plate 200.

Further, in the embodiment of the present application, two pairs of fixing block 120 are provided, and each pair of the fixing blocks 120 is arranged symmetrically around the rotation axis of the mounting top plate 200. In this embodiment, the downlight body 100 may be matched with one pair of the fixing blocks, which is beneficial to improve the connection efficiency.

Please refer to FIGS. 1 to 4. In the embodiment of the present application, the base plate 210 is a plate structure arranged in a tile. In this way, with the plate structure in which the mounting top plate is installed, it is helpful to avoid the occupation of the space of the mounting top plate in the up and down direction.

Please refer to FIGS. 1 to 4. In the embodiment of the present application, the cylindrical body 110 and each fixing block 120 have an integrated structure. Such that it is advantageous to improve the connection strength between the cylindrical body 110 and each fixing block 120.

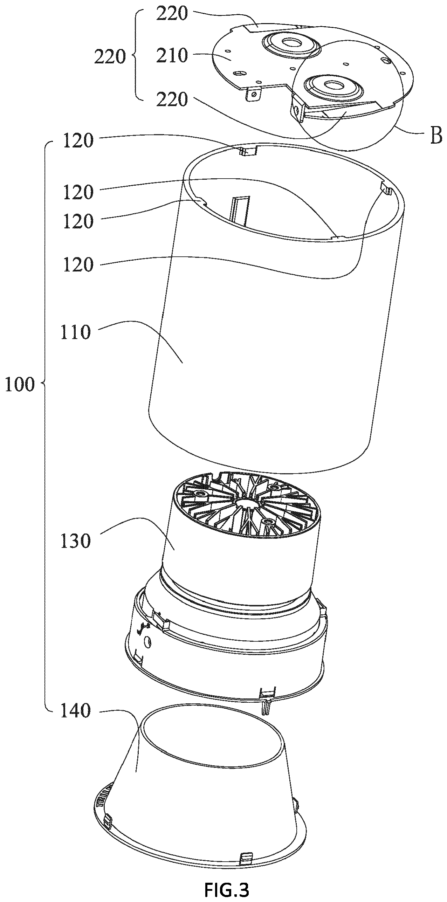

Please refer to FIG. 3. In the embodiment of the present application, the surface-mount downlight also includes a reflective cover 140 located in the cylindrical body 110 and used to focus the light generated by the light source module 130, so as to improve the illumination efficiency.

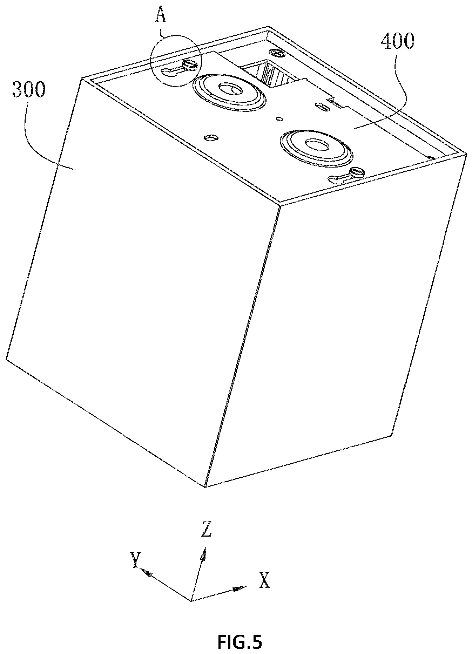

Another embodiment of the present application also provides a surface-mount downlight. In this embodiment, according to the definition of the XYZ rectangular coordinate system established in FIG. 5, the positive direction of the X axis is defined as the front direction, and the negative direction of the X axis is defined as the rear direction. The positive direction of the Y axis is defined as the left direction, and the negative direction of the Y axis is defined as the right direction. The positive direction of the Z axis is defined as the up direction, and The negative direction of the Z axis is defined as the down direction.

Please refer to FIGS. 5 to 9, the surface-mount downlight includes a mounting top plate 400 and a downlight body 300.

The mounting top plate 400 is fixed connected to the ceiling. The mounting top plate 400 is arranged flatly so that it is advantageous to avoid the occupation of the space of the mounting top plate 400 in the up and down direction. at least two mounting chute 410 passing through in the up and down direction is formed in the mounting top plate 400, arranged at intervals in the left and right direction, and each mounting chute is extended in the front and rear direction, and both include a front chute section 4101 and a rear chute section 4102 in the front and rear direction, where the groove width of the front chute section 4101 is smaller than the groove width of the rear chute section 410. In this embodiment, the mounting top plate 400 may be made of stainless steel.

The downlight body 300 includes a shell body 310 having a cylindrical shape, at least two fixed sliding posts 320, and a light source module 330 for generating light located within the shell body 310. The distribution and arrangement of each fixed sliding post 320 corresponds to that of the mounting chute 410, and each fixed sliding post 320 includes a connecting post 321 extended in the up and down direction and a suspension post 322 . The lower end of the connecting post 321 is connected to the shell body 310, while the upper end is connected to the suspension post 322, where the diameter of the connecting post 321 is smaller than the groove width of the front chute section 4101, and the diameter of the suspension post 322 is smaller than the groove width of the rear chute section 4102, so that the suspension post 322 can pass through the rear chute section 4102. The diameter of the suspension post 322 is greater than the groove width of the front chute section 4101, so that the suspension post 322 is suspended by the mounting top plate 400 when being above the front chute section 4101.

During installation, first installing the mounting top plate 400 to the ceiling, where the installation of the mounting top plate 400 is relatively simple due to the the mounting top plate 400 is lighter in weight, and then lifting the downlight body 300 with each of the suspension posts 322 corresponds to a rear chute section 4102, then making the suspension post 322 pass through the rear chute section 4102, and finally, sliding the connecting post 321 into the front chute section 4102, then removing the external force of lifting the downlight body 300, thereby the suspension post322 is suspended by the mounting top plate 400, and the installation of the surface-mount downlight is completed.

It can be seen from the above that based on the structural design of the present application, the surface-mount downlight is divided into two parts, one part is the lighter mounting top plate 400, and the other is the heavier downlight body 300. During the installation process, when installing the mounting top plate 400, there is no need to lift the heavier downlight body 300, and when installing the downlight body 300, it only requires lifting the downlight body 300, make each suspension post 322 corresponds to a rear chute section 4102 and make the suspension post 322 passes through the rear chute section 4102, then sliding the connecting post 321 into the front chute section 4101 to complete the installation of the surface-mount downlight, such that the supporting time by the staff is reduced .thereby beneficially reduces the difficulty of installation by the staff.

In the embodiment of the present application, the downlight body 300 has a rectangular structure as a whole.

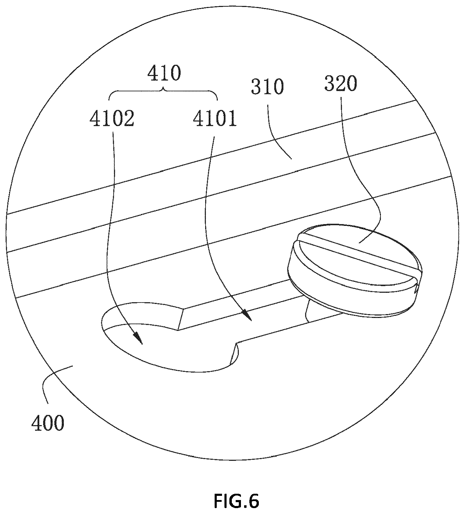

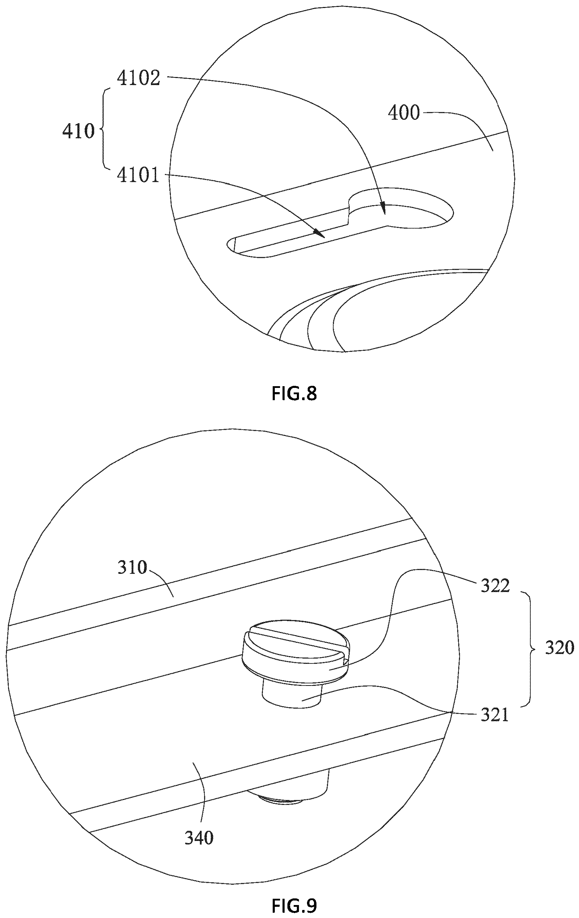

Please refer to FIGS. 6 and 9. In the embodiment of the present application, the downlight body 300 may also include an intermediate connecting member 340 for connecting each fixed sliding post 320 to the shell body 310. The intermediate connecting member 340 is located within the shell body 310. Based on this structure, firstly, it is advantageous to simplify the thickness of the shell body 310, and secondly, the fixed sliding post 320 can be hidden inside the shell body 310.

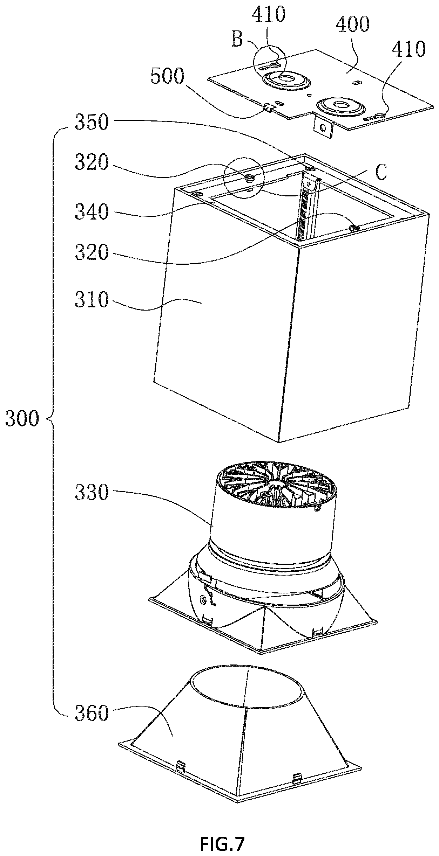

Referring to FIG. 7, in the embodiment of the present application, at least two first screw holes are formed on the upper side of the intermediate connecting member 340, each connecting post 321 is provided with an external thread on the outer cylindrical surface, and each connecting post 321 is threadingly engaged in the first screw hole. Based on this structural design, it is advantageous to adjust the positional relationship between the mounting top plate 400 and the downlight body 300 through the rotation of each connecting post 321. In actual applications, the mounting top plate 400 may be inclined, then the connecting post can be rotated 321 to adjust without remounting the mounting top plate 400 again.

Referring to FIG. 7. In the embodiment of the present application, the intermediate connecting member 340 has an annular structure, and the outer annular surface of the intermediate connecting member 340 contact against the inner wall of the shell body 310. Based on this structural design, the outer shape of the intermediate connecting member 340 matches the cross-sectional shape of inner wall of the shell body 310, so that it beneficially improves a placement efficiency for placing the intermediate connecting member 340 on the inner wall of the shell body 310.

Referring to FIG. 7, in the embodiment of the present application, the downlight body 300 may also include at least two connection assemblies 350. The connection assembly 350 includes connection protrusions integrally connected to the shell body 310 and located in a cavity of the shell body 310 and fastening screws for fastening the intermediate connecting member 340 to the connecting protrusions, the connecting protrusion is provided with a second screw hole on its upper side, and each connecting protrusion is located on the lower side of the intermediate connecting member 340; the intermediate connecting member 340 is provided with at least two through-holes, each of which is used for the fastening screw to pass through and screwed to the second screw hole. Based on this structural design, it is advantageous to simplify the connection relationship between the shell body 310 and the intermediate connecting member 340.

Please refer to FIGS. 5 and 7, in the embodiment of the present application, the projection of the mounting top plate 400 in the up and down direction falls into that of the shell body 310 in the up and down direction. Such that the shell body 310 may be able to cover the mounting top plate 400 and prevent the mounting top plate 400 from being exposed in the up and down direction.

Further, the horizontal position of the intermediate connecting member 340 is lower than that of the upper opening of the shell body 310. Such that the mounting top plate 400 can be accommodated in the shell body 310 and further prevented from being exposed.

Please refer to FIGS. 5 and 7. In the embodiment of the present application, the surface-mount downlight further includes an elastic arm 500. One end of the elastic arm 500 is connected to the mounting top plate 400 and the other end extends downward. The elastic arm 500 elastically interferes with the intermediate connecting member 340 when the suspension post 322 passes through the rear chute section 4102 and the connecting post 321 moves to the front chute section 4101, so that it beneficially increases the static friction force between the mounting top plate 400 and the suspension post 322 due to the elastic restoring force of the elastic arm 500 after the downlight body 300 is connected to the mounting top plate 400, thereby beneficially prevents the downlight body 300 from sliding out of the mounting top plate 400.

Referring to FIG. 6, in the embodiment of the present application, the length of the front chute section 4101 is greater than the diameter of the connecting post 321, which is beneficial to avoid the connecting post 321 automatically sliding out of the front chute section 4101, and the length of the front chute section 4101 It is larger than the diameter of the suspension post 322 so that it is beneficial to ensure that the contact area of the suspension post 322 and the intermediate connecting member 340 is maximized.

Referring to FIG. 7, in the embodiment of the present application, the surface-mount downlight further includes a reflective cover 360 located in the shell body 310 and used to focus the light generated by the light source module 330.

The above disclosures are merely the preferred embodiments of the present application, and are not intended to limit this application. Any modification, equivalent replacement or improvement made under the principles of this application should be included. The protection scope of the present application is defined by the appended claims.

## Claims

1. A surface-mount downlight configured to be mounted to a ceiling, comprising:
a mounting top plate (200) configured to be fixedly connected to the ceiling; and
a downlight body (100) configured to be connected to the mounting top plate (200), the downlight body (100) comprising a hollow main body (110) and a light source module (130) within the hollow main body (110),
wherein,
the surface-mount downlight is provided with a suspension mount assembly, the suspension mount assembly comprising:
at least two connecting plates (220) provided by the mounting top plate (200); and
at least two fixing blocks (120) provided by and integrally formed with the hollow main body (110) and corresponding to the at least two connecting plates (220),
wherein the suspension mount assembly is configured to be in:
i) a first position in which the at least two connecting plates (220) and the at least two fixing blocks (120) avoid each other in a suspension mount direction, so that the downlight body (100) is allowed to freely move toward and away from the mounting top plate (200) in the suspension mount direction, thereby facilitating assembly and disassembly; and
ii) a second position in which the downlight body (100) is suspension-mounted to the mounting top plate (200), and the downlight body (100) is prohibited from moving toward or away from the mounting top plate (200) in the suspension mount direction;
wherein, via a rotational movement of the mounting top plate (200) with respect to the downlight body (100) in a direction substantially transverse to the suspension mount direction, the suspension mount assembly is allowed to be switched between the first position and the second position,
**characterized in that**, the at least two fixing blocks (120) are disposed on the inner wall of the hollow main body (110) and located at the same horizontal position, and the at least two connecting plates (220) are arranged at the edge of the mounting top plate (200) and extending circumferentially, wherein the connecting plate (220) further comprises a connecting portion (221) and a hanging portion (222) connected to the connecting portion (221) and configured to be inclined downward, wherein the connecting plate (220) further comprising a guide portion (223) connected to an end of the hanging portion (222) that faces away from the connecting portion (221), and the guide portion (223) is arranged substantially horizontally.

2. The surface-mount downlight according to claim 1, wherein each of the hanging portions (222) is configured to be extended clockwise, and a clockwise rotation of the mounting top plate (200) with respect to the downlight body (100) results in switching from the first position to the second position, or each of the hanging portions (222) is configured to be extended counterclockwise, and a counterclockwise rotation of the mounting top plate (200) with respect to the downlight body (100) results in switching from the first position to the second position.

3. The surface-mount downlight according to any one of claims 1 to 2, wherein the number of the fixing blocks (120) is larger than the number of connecting plates (220), and each of the connecting plates (220) is respectively mounted with a fixing block (120) when the mounting top plate (200) is in the second position.

4. The surface-mount downlight according to any one of claims 1 to 3, wherein two connection plates (220) are provided, and two connection plates (220) are symmetrically arranged about a rotation axis of the mounting top plate (200).

5. The surface-mount downlight according to any one of claims 1 to 4, wherein the surface-mount downlight further comprising a reflective cover (140) located in the hollow main body (110) for focusing light generated by the light source module (130).

## Patentansprüche

1. Ein Downlight mit Oberflächenmontage, das so konfiguriert ist, dass es an einer Decke montiert werden kann, umfassend:
eine obere Montageplatte (200) , die so gestaltet ist, dass sie fest mit der Decke verbunden werden kann; und
einen Downlight-Körper (100), der so konfiguriert ist, dass er mit der oberen Montageplatte (200) verbunden werden kann, wobei der Downlight-Körper (100) einen hohlen Hauptkörper (110) und ein Lichtquellenmodul (130) innerhalb des hohlen Hauptkörpers (110) umfasst,
wobei,
das Downlight mit Oberflächenmontage mit einer Aufhängevorrichtung versehen ist, die Aufhängevorrichtung umfassend:
mindestens zwei Verbindungsplatten (220) , die von der oberen Montageplatte (200) bereitgestellt werden; und
mindestens zwei Befestigungsblöcke (120), die an dem hohlen Hauptkörper (110) vorgesehen und einstückig mit diesem ausgebildet sind und mit den mindestens zwei Verbindungsplatten (220) in Eingriff gebracht werden können,
wobei die Aufhängevorrichtung derart konfiguriert ist, dass sie:
i) eine erste Position einnehmen kann, in der die mindestens zwei Verbindungsplatten (220) und die mindestens zwei Befestigungsblöcke (120) einander in einer Aufhängungsmontagerichtung ausweichen, so dass sich der Downlight-Körper (100) in der Aufhängungsmontagerichtung frei auf die obere Montageplatte (200) zu und von dieser weg bewegen kann, wodurch die Montage und Demontage erleichtert wird; und
ii) eine zweite Position einnehmen kann, in der der Downlight-Körper (100) an der oberen Montageplatte (200) aufgehängt ist und der Downlight-Körper (100) daran gehindert wird , sich in der Aufhängungsmontagerichtung zur oberen Montageplatte (200) hin oder von ihr weg zu bewegen;
wobei durch eine Drehbewegung der oberen Montageplatte (200) in Bezug auf den Downlight-Körper (100) in einer Richtung, die im Wesentlichen quer zur Aufhängungsmontagerichtung verläuft, die Aufhängevorrichtung zwischen der ersten Position und der zweiten Position variiert werden kann,
**dadurch gekennzeichnet, dass** die mindestens zwei Befestigungsblöcke (120) an der Innenwand des hohlen Hauptkörpers (110) angeordnet sind und sich an der gleichen horizontalen Position befinden, und die mindestens zwei Verbindungsplatten (220) am Rand der oberen Montageplatte (200) angeordnet sind und sich in Umfangsrichtung erstrecken, wobei die Verbindungsplatte (220) ferner einen Verbindungsabschnitt (221) und einen Aufhängeabschnitt (222) umfasst, der mit dem Verbindungsabschnitt (221) verbunden und so konfiguriert ist, dass er nach unten geneigt ist, wobei die Verbindungsplatte (220) ferner einen Führungsabschnitt (223) umfasst, der mit einem Ende des Aufhängeabschnitts (222) verbunden ist, das von dem Verbindungsabschnitt (221) weg weist, und der Führungsabschnitt (223) im Wesentlichen horizontal angeordnet ist.

2. Downlight mit Oberflächenmontagenach gemäß Anspruch 1, wobei jeder der Aufhängeabschnitte (222) so konfiguriert ist, dass er im Uhrzeigersinn ausgefahren wird, und eine Drehung der oberen Montageplatte (200) im Uhrzeigersinn in Bezug auf den Downlight-Körper (100) zu einem Wechsel von der ersten Position in die zweite Position führt, oder jeder der Aufhängeabschnitte (222) so konfiguriert ist, dass er gegen den Uhrzeigersinn ausgefahren wird, und eine Drehung der oberen Montageplatte (200) gegen den Uhrzeigersinn in Bezug auf den Downlight-Körper (100) zu einem Wechsel von der ersten Position in die zweite Position führt.

3. Downlight mit Oberflächenmontagenach gemäß einem der Ansprüche 1 bis 2, wobei die Anzahl der Befestigungsblöcke(120) größer ist als die Anzahl der Verbindungsplatten (220) und jede der Verbindungsplatten (220) jeweils mit einem Befestigungsblock (120) montiert ist, wenn sich die obere Montageplatte (200) in der zweiten Position befindet.

4. Downlight mit Oberflächenmontage gemäß einem der Ansprüche 1 bis 3, wobei zwei Verbindungsplatten (220) vorgesehen sind, und zwei Verbindungsplatten (220) symmetrisch um eine Drehachse der oberen Montageplatte (200) angeordnet sind.

5. Downlight mit Oberflächenmontage gemäß einem der Ansprüche 1 bis 4, wobei das Downlight mit Oberflächenmontage ferner eine reflektierende Abdeckung (140) aufweist, die in dem hohlen Hauptkörper (110) angeordnet ist, um das von dem Lichtquellenmodul (130) erzeugte Licht zu bündeln.

## Revendications

1. Projecteur à montage en surface configuré pour être monté sur un plafond, comprenant :
une plaque supérieure de montage (200) configurée pour être connectée de manière fixe au plafond ; et
un corps de projecteur (100) configuré pour être connecté à la plaque supérieure de montage (200), le corps de projecteur (100) comprenant un corps principal creux (110) et un module de source lumineuse (130) à l'intérieur du corps principal creux (110),
dans lequel,
le projecteur à montage en surface est pourvu d'un ensemble de montage à suspension , l'ensemble de montage à suspension comprenant :
au moins deux plaques de connexion (220) prévues par la plaque supérieure de montage (200) ; et
au moins deux blocs de fixation (120) prévus par et formés d'un seul tenant avec le corps principal creux (110) et correspondant aux au moins deux plaques de connexion (220),
dans lequel l' ensemble de montage à suspension est configuré pour être dans :
i) une première position dans laquelle les au moins deux plaques de connexion (220) et les au moins deux blocs de fixation (120) s'évitent l'un l'autre dans une direction de montage en suspension, de sorte que le corps de projecteur (100) peut se rapprocher et s'éloigner librement de la plaque supérieure de montage (200) dans la direction de montage en suspension, facilitant ainsi le montage et le démontage ; et
ii) une seconde position dans laquelle le corps de projecteur (100) est monté en suspension sur la plaque supérieure de montage (200), et le corps de projecteur (100) ne peut pas se rapprocher ou s'éloigner de la plaque supérieure de montage (200) dans la direction de montage en suspension ;
dans lequel, par l'intermédiaire d'un mouvement de rotation de la plaque supérieure de montage (200) par rapport au corps de projecteur (100) dans une direction sensiblement transversale à la direction de montage de suspension, l'ensemble de montage à suspension peut être commuté entre la première position et la seconde position,
**caractérisé en ce que**, les au moins deux blocs de fixation (120) sont disposés sur la paroi intérieure du corps principal creux (110) et situés à la même position horizontale, et les au moins deux plaques de connexion (220) sont disposées au bord de la plaque supérieure de montage (200) et s'étendent circonférentiellement, dans lequel la plaque de connexion (220) comprend en outre une partie de connexion (221) et une partie de suspension (222) reliée à la partie de connexion (221) et configurée pour être inclinée vers le bas, dans lequel la plaque de connexion (220) comprend en outre une partie de guidage (223) reliée à une extrémité de la partie de suspension (222) qui est tournée à l'opposé de la partie de connexion (221), et la partie de guidage (223) est disposée sensiblement horizontalement.

2. Projecteur à montage en surface selon la revendication 1, dans lequel chacune des parties de suspension (222) est configurée pour être étendue dans le sens des aiguilles d'une montre, et une rotation dans le sens des aiguilles d'une montre de la plaque supérieure de montage (200) par rapport au corps de projecteur (100) entraîne la commutation de la première position à la seconde position, ou chacune des parties de suspension (222) est configurée pour être étendue dans le sens inverse des aiguilles d'une montre, et une rotation dans le sens inverse des aiguilles d'une montre de la plaque supérieure de montage (200) par rapport au corps de projecteur (100) entraîne la commutation de la première position à la seconde position.

3. Projecteur à montage en surface selon l'une quelconque des revendications 1 à 2, dans lequel le nombre de blocs de fixation(120) est supérieur au nombre de plaques de connexion (220), et chacune des plaques de connexion (220) est respectivement montée avec un bloc de fixation (120) lorsque la plaque supérieure de montage (200) est dans la deuxième position.

4. Projecteur à montage en surface selon l'une quelconque des revendications 1 à 3, dans lequel deux plaques de connexion (220) sont prévues, et deux plaques de connexion (220) sont disposées symétriquement autour d'un axe de rotation de la plaque supérieure de montage (200).

5. Projecteur à montage en surface selon l'une quelconque des revendications 1 à 4, dans lequel le projecteur à montage en surface comprend en outre un couvercle réfléchissant (140) situé dans le corps principal creux (110) pour focaliser la lumière générée par le module de source lumineuse (130).
